# EUROPEAN PATENT SPECIFICATION

(11) **EP 1 327 336 B1**
(45) Date of publication and mention of the grant of the patent: **09.02.2011**
(21) Application number: 00964504.5
(22) Date of filing: 03.10.2000
(51) Int. Cl.: H04L 12/56, H04Q 11/04

(54) **PACKET SEQUENCE CONTROL**
PAKETSEQUENZSTEUERUNG
CONTROLE DE SEQUENCE DE PAQUETS

(43) Date of publication of application: 16.07.2003
(73) Proprietor: GOS Networks Limited, Temple Quay Bristol BS1 6EA (GB)
(72) Inventor: DAVIES, Neil James, Bristol BS41 9HR (GB); THOMPSON, Peter William, Bristol BS8 2TY (GB); HOLYER, Judith Yvonne, Bristol BS8 4YB (GB); LAFAVE, Laura, Anne, Bristol BS8 4TT (GB); VOWDEN, Christopher James, Bristol BS4 4QA (GB); WILLMOTT, Graham, Bristol BS5 9HS (GB)
(74) Representative: Williams, David John
(86) International application number: PCT/GB2000/003809
(87) International publication number: WO 2002/030066

(56) References cited:
- EP-A- 0 669 777
- US-A- 5 602 845
- CHAO H J ET AL: "QUEUE MANAGEMENT WITH MULTIPLE DELAY AND LOSS PRIORITIES FOR ATM SWITCHES" INTERNATIONAL CONFERENCE ON COMMUNICATIONS (ICC),US,NEW YORK, IEEE, vol. -, 1 May 1994 (1994-05-01), pages 1184-1189, XP000438688
- KIM W -J ET AL: "THE FB-RED ALGORITHM FOR TCP OVER ATM" SYDNEY, NOV. 8 - 12, 1998,NEW YORK, NY: IEEE,US, 8 November 1998 (1998-11-08), pages 551-555, XP000894360 ISBN: 0-7803-4985-7

## Description

### Cross-Reference to Related Applications

This application is related to patent publication numbers WO02/30060, WO02/30064, WO02/30062, WO02/30065, WO02/30061, WO02/30063 filed simultaneously hereto on 3 October 2000.

### Field of the Invention

The present invention relates generally to the transmission of digital packets in telecommunications systems, and particularly but not exclusively to contention management within and between streams of packets in store and forward networks.

### Background of the Invention

There exist many techniques for controlling digital packet information flows. Some such techniques involve providing a certain quality of service for different types of traffic. There are a number of general requirements associated with ensuring quality of service levels. Where quality differentiation is provided for more than one stream, it is necessary to ensure that different quality requirements for the various streams of packets are individually and collectively met within the constraint of the finite quality available. In order to provide differential levels of loss and delay as well as throughput, the quantity of input data and its temporal pattern need to be constrained. The quantity of input data serviced, i.e. the throughput of data, is known as long term management. Controlling the temporal pattern of data is known as short term management. The traffic in particular streams also needs to be protected from the consequential effects of burstiness in other streams. For example, individual streams of traffic need to be protected from the effects of protocols such as TCP, which is designed to use as much bandwidth as possible without regard to other streams, and from malicious intentions or errors in the end devices of the network. It is also necessary to manage the interleaving of individual streams within the constraints of the available resources.

The management of quality of service is particularly difficult at the periphery or edge of a network, as devices here are not under the control of the central administrator of the network. The behaviour of these devices therefore cannot be assumed or predicted. The ever-increasing diversity in applications, traffic, and convergence also complicates the management of quality of service. Different traffic has different quality of service requirements, and the consequences of delay and/or loss differs for different traffic according to the interpretation placed on them by an application.

The possibility of replicating network devices to enable traffic with different quality requirements to be physically separated and processed separately is impractical, as the implementation of network devices is expensive. For this reason, it is desirable to manage quality of service of different traffic using a single network device.

There is currently a trend towards forming traffic patterns as constant bit rate patterns, with the aim of increasing predictability. This is deterministic control which focuses on improving the loss characteristics and efficiency of a network. However such techniques have the disadvantage that quality assurance in the presence of "over-booking" requires total global knowledge of the behaviour of the sources in the network such as their on/off times, their relative phase, and the effects of their past history on the state of the network.

Chao H J et al: "Queue Management with Multiple Delay and Loss Priorities for ATM Switches", International Conference on Communications (ICC), US, New York, IEEE, voL- 1 May 1994 (1994-05-01), pages 1184-1189, XP000438688 discloses a queue manager in ATM network nodes which will schedule ATM cells' departing and discarding sequences based on their loss and delay priorities.

Packets received from a transmission medium implicitly arrive in a specific order. Subsequent processing to deliver differentiated quality of service to a logical stream received from that transmission medium can cause re-ordering. Such re-ordering is often undesirable. The explicit management of sequencing though sequence numbers presents difficulties when such streams have to be replicated, for example in multi casting.

It is therefore an object of the present invention to provide an improved technique for controlling information flow in a data transmission system, which enables the control of the quality of service requirements for different types of traffic to be improved.

### Summary of the Invention

In accordance with the present invention there is provided a method of controlling an information flow in a data transmission system, comprising: receiving a plurality of data packets from a plurality of data streams; allocating a packet identifier and a priority level to each packet; servicing packet identifiers in dependence on the allocated priority levels; and characterised in that it further comprises instructing a queue memory to queue the packets in respective queues of the relevant data streams, in the order in which they arrived; and outputting a packet from the head of a queue, which queue includes a packet identified by a serviced packet identifier.

Thus the present invention presents a novel approach to assuring sequence preservation without the use of explicit sequencing which permits arbitrary replication of data.

The priority level may indicate a class of loss and a class of urgency of service for the packet. The step of servicing each packet identifier may include selectively discarding packet identifiers, wherein if a packet identifier is discarded the corresponding stored packet is removed. Each packet may be output at a configured rate. The configured rate may be less then a maximum rate at which the data packets may be output.

In a further aspect of the present invention provides a controller for controlling an information flow in a data transmission system, comprising; input means for receiving a plurality of data packets from a plurality of data streams; control means for allocating a packet identifier and a priority level to each packet; wherein the packet identifier represents the sequence in which the packet was received in the information flow; servicing means for servicing packet identifiers in dependence on the allocated priority levels; and characterised in that it further comprises instructing means for instructing a queue memory to queue the packets in respective queues of the relevant data streams, in the order in which they arrived; and output means for outputting a packet at the head of a queue, which queue includes a packet identified by a serviced packet identifier.

The controller may further comprise a rate limiter for outputting the data packet at a configured rate. The controller may further comprise means for selectively discarding the plurality of received data packets and/or selectively time shifting the plurality of received data packets. Said means may comprise a policer/shaper.

### Brief Description of the Figures

The invention will be best understood by way of example with reference to the accompanying Figures, in which:
Figure 1 illustrates a block diagram of the architecture of a multiplexor in accordance with an exemplary embodiment of the invention;
Figure 2 illustrates the principle of queuing in accordance with an exemplary embodiment of the invention;
Figure 3 illustrates the principle of allocating priority levels in accordance with an exemplary embodiment of the invention;
Figure 4 illustrates the principle of stochastically servicing packets in accordance with an exemplary embodiment of the invention;
Figure 5 illustrates the principle of conceptual packet length in accordance with an exemplary embodiment of the invention.
Figure 6(a) and 6(b) illustrate the principle of cascading shaper/policers in accordance with an exemplary embodiment of the invention;
Figure 7 illustrates the principle of defining a transported load in dependence on an offered load in an exemplary embodiment of the present invention;
Figure 8 illustrates an exemplary embodiment of a Policer/Shaper for implementing the present invention;
figure 9 illustrates an exemplary embodiment of a Cherish/Urgency Multiplexor for implementing the present invention;
Figure 10 illustrates the load profile for an exemplary Policer/Shaper implementation.

### Description of the Preferred Embodiment

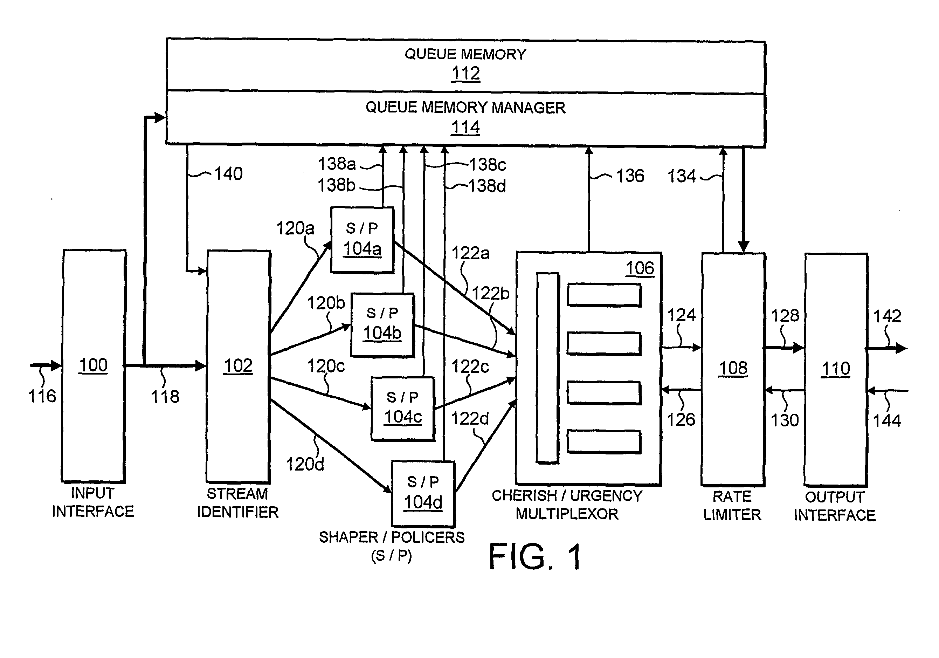

Referring to Figure 1, there is shown a diagram illustrating the architecture of a basic multiplexor in respect of which the operation of the present invention is described herein. It should be noted that the application of the present invention is not limited to the specific architecture shown in Figure 1, and from reading the following description the skilled person will appreciate the general applicability of the present invention. The exemplary multiplexor 100 of Figure 1 multiplexes streams of data in a packet-based network as will be described in further detail hereinbelow.

The exemplary multiplexor generally designated by reference numeral 100, comprises an input interface 100, a stream identifier 102, a plurality of policer/shapers 104, a cherish/urgency multiplexer 106, a rate limiter 108, an output interface 110, a queue memory 112, and a queue memory manager 114.

The multiplexor 100 receives as an input on lines 116 an information flow. The information flow comprises packets which may be associated with various different types of data traffic. The packets may be received in parallel or in series. The input on line 116 may receive parallel information flows. The input data stream 116 may contain packets associated with various different types of traffic. For the purposes of the described example, it is assumed the data stream includes a voice over IP stream, a block data transfer stream, and a telnet traffic stream.

The input interface 100 provides the basic functionality necessary to receive transmitted data packets from an external system or device via a transmission medium. The input interface 100 receives packets from the input data stream 116 and forwards the received packets, preferably in parallel, on lines 118 to both the stream identifier 102 and the queue memory manager 114. The input interface must have functionality which is appropriate for the particular external system or device from which packets on the input data stream 116 originate. The input interface is not directly responsible for any processing related to the quality management of the data stream in accordance with the present invention. The input interface may have some basic functionality to perform an initial check on packets received in the input data stream. For example, if a corrupted packet is received the input interface may discard the packet.

The structure of the input interface is implementation dependent. The basic functionality of the input interface, required to perform any desired features, will be apparent to one skilled in the art.

The queue memory manager 114 is responsible for managing a set of queues and a packet storage area. The queue memory manager 114 receives packets from the input interface 100. On arrival of a packet, the queue memory manager allocates a unique identifier to the packet, and sends the identifier for the packet to the stream identifier 102 on line 140. The queue memory manager additionally stores the packet in a temporary packet buffer. The queue memory manager also assigns a reference counter to the packet, and initialises the reference counter for that packet to zero. As will be described further hereinbelow, the reference counter is used by the queue memory manager to determine whether.the packet associated with the reference counter is still being processed by the multiplexer 100, or whether it should be removed from (or not initially entered into) the queue memory 112.

The packet identifier is an identifier which uniquely identifies a packet. The packet identifier uniquely identifies the packet for the purpose of storing the packet identifier in the queue memory 112 as is described further hereinbelow and distinguishing each packet form other packets in the memory. In a simple implementation the packet identifier is a number, each packet being allocated a packet identifier being the next number in the sequence. Alternatively, the packet identifier may be composed of unique information from the packet header. In systems in which the packet size is variable, the length of the packet may be included in the packet identifier.

The stream identifier 102 also receives the packets from the input interface on lines 118, and receives the packet identifier for each packet on line 140 from the queue memory manager 114. The stream identifier 102 is responsible for determining which stream each packet belongs to. Thus, for example, the stream identifier will determine whether a particular packet is associated with a voice over IP stream, a block data transfer stream, or a telnet traffic stream. In accordance with the stream to which the particular received packet identifier belongs, the stream identifier forwards the packet identifier for that packet to one of the policer/shapers 104 for further processing.

As will become apparent from the following description, the remainder of the processing is based on the packet identifier and not the packet. The packet identifier advantageously provides an efficient representation of the packet. As will be described hereinafter, the queue memory and packet identifiers ensure that the original position in sequence of each individual packet is not lost in the multiplexing operation.

Policer/shapers 104 are an operational variant of a FIFO queue, in which there is subsidiary processing associated with the insertion and removal of elements from the queue. Such FIFO queues are well-known, and their implementation will be well within the scope of a person skilled in the art. The configuration of the policer/shapers is implementation dependent.

In the simple example shown in Figure 1 it is assumed that one policer/shaper is allocated to each of the different types of traffic stream being received. Thus, for example, the policer/shaper 104a is allocated to voice over IP traffic, the policer/shaper 104b is allocated to block data transfer traffic, and the policer/shaper 104c is allocated to telnet traffic. The policer/shaper 104d is shown in Figure 1 by way of illustrating a means for managing packets associated with streams other than those processed by the policer/shapers 104a to 104c. Thus the stream identifier 102 forwards packet identifiers associated with voice over IP packets on line 120a to the policer/shaper 104a, forwards packet identifiers associated with block data transfer packets on line 120b to the policer/shaper 104b, and forwards packet identifiers associated with telnet traffic packets on line 120c to the policer/shaper 104c.

In the case of multi-casting or other services requiring replication (e.g. monitoring), the stream identifier 102 may forward packet identifiers to more than one policer/shaper 104.

It should be noted that the stream identifier 102 does not forward packets for further processing within the multiplexer 100. Rather, the stream identifier forwards the packet identifiers allocated to packets for further processing in the multiplexer 100.

The policer/shapers 104 are responsible for the assignment of quality classifications to the packets within a stream, and responsible for the quality control of the stream in both the short term and the long term by selectively discarding packet identifiers in the stream and selectively time-shifting packets in the stream.

One function of policer/shapers is to service packets, using the corresponding packet identifiers, with a variable service rate. As a result, the packet identifiers leaving a policer/shaper are variably spaced, preferably with a random or pseudorandom spacing. Spacing the packets randomly ensures that the least urgent traffic-is eventually serviced by the cherish/urgency multiplexor 106. The variable spacing of the packets at the output of the policer/shapers 104 reduces the coherence between streams from independent sources. Creating independent temporal patterns between streams increase the fairness of the cherish/urgency multiplexor decision processes. The cherish/urgency classifications allocated to the packet identifiers in the policer/shapers do not on their own ensure fairness unconditionally.

For example, the delay experienced by a packet with an associated low urgency level depends on the temporal pattern of the more urgent traffic streams. If two streams with different cherish/urgency levels are temporarily coherent, the more cherished packets may always "win" the race to enter the cherish/urgency multiplexor 106 and/or the more urgent data may always be transmitted first. This becomes statistically less likely if the streams have variably spaced packets.

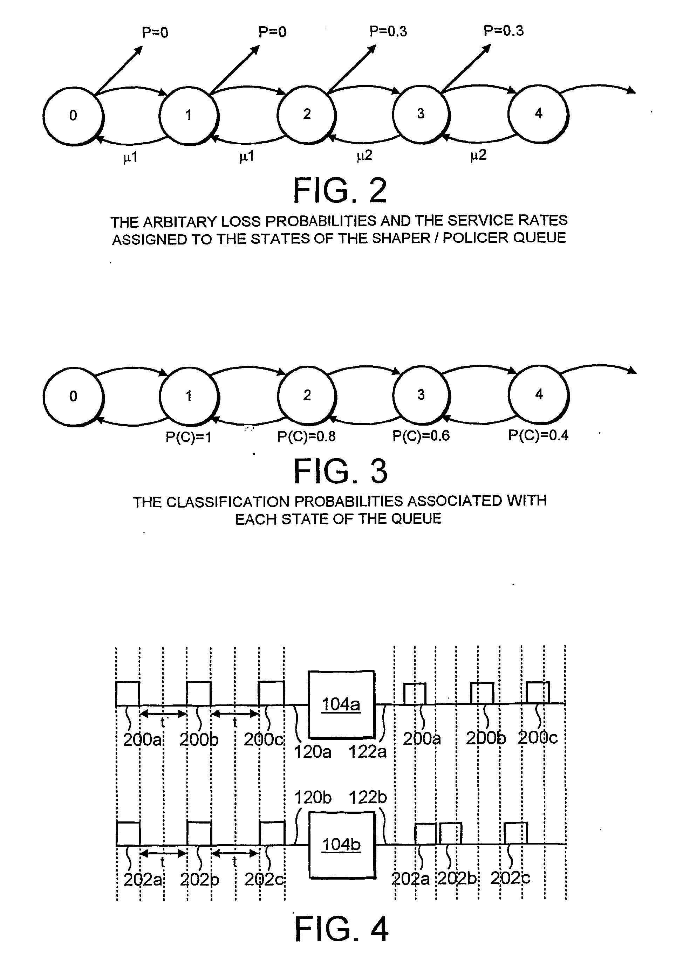

Referring to Figure 4, there is illustrated two of the policer/shapers 104a and 104b of Figure 1, with examples of data packet streams on their inputs and outputs. The policer/shaper 104a receives packets 200 at a constant spacing t on its input line 120a. The policer/shaper 104b receives packet identifiers 202 at a constant spacing *t* on its input line 120b. The policer/shaper 104a services the packet identifiers in its queue such that the packets 200a, 200b and 200c are generated on its output line 122a with variable spacing therebetween. Similarly, the servicing of packet identifiers by the policer/shaper 104b results in packets identifiers 202a, 202b and 202c on its output line 122b having variable spacing.

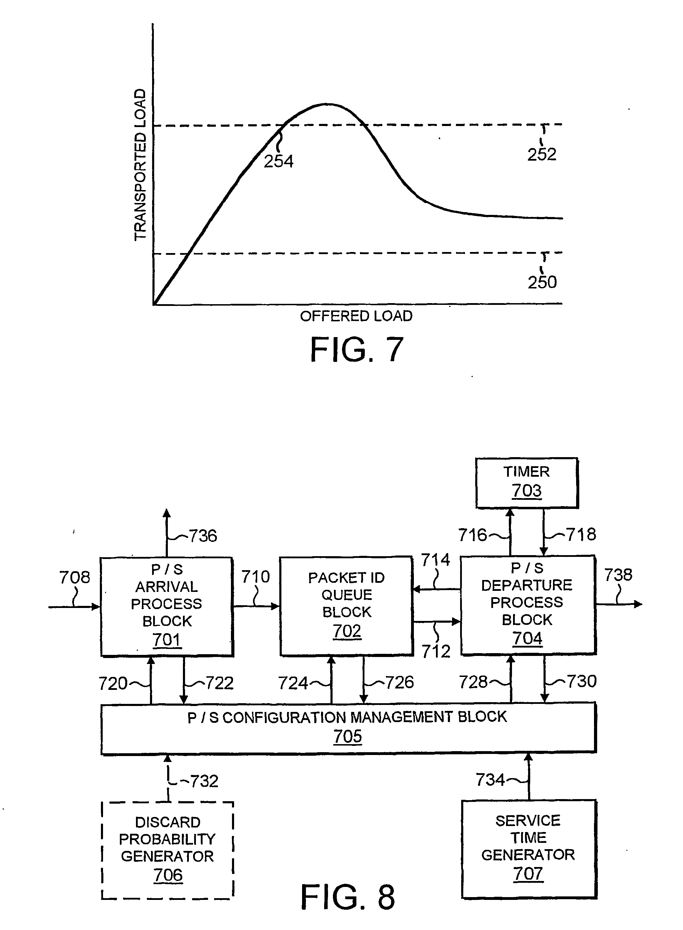

A second function of the policer/shapers is to limit the volume of traffic on a stream, achieved by the selective discard of packets. The nature of the policing policy is specified in terms of a load profile, which is a function of (at least) the offered load (i.e. the rate of arrival of packets on a stream). Therefore, and advantageously, there can be different characteristics defined for various load levels. That is, quality can be down-graded or up-graded as the arrival rate increases. The transport characteristics can therefore be configured to better match the application requirements and to avoid the effects of abnormal offered load, e.g. denial of service attacks. Referring to Figure 7, the principle of defining transport characteristics in terms of offered load is illustrated.

In Figure 7 the X-axis illustrates the offered load and the Y-axis illustrates the load which is actually transported. As can be seen in Figure 7 there are two threshold levels: a lower threshold level 250; and an upper threshold level 252. If the offered load does not exceed the threshold level 252, then the offered load can be transported within configured guarantees. If the offered load exceeds the threshold level 252, then the offered load cannot be guaranteed to be transmitted. The lower threshold level 250 represents the minimum transported load regardless of how high the offered load becomes.

Thus referring once again to Figure 7, once the offered load reaches the upper threshold level 252 and point 254, the transported load is adjusted such that it is reduced. As the offered load increases, the transported load continues to reduce to the point where it steadies out and tends towards the lower threshold level 250.

Thus, the rate of packet discard being determined by the offered load. The upper threshold level defines a level at which the selective discard of packets is triggered. Packets are preferably discarded based on an instantaneous approximation of the offered load. Packets may be discarded probabilistically based on an instantaneous approximation of the offered load. If the offered load results in a transported load exceeding the upper threshold level, the transported load is reduced below the upper threshold level by selectively discarding packets. When reduced, the transported load is preferably reduced to a level above the lower threshold level. The reduction in the transported load is greater the larger the offered load. The transported load is further reduced responsive to an increase in the offered load.

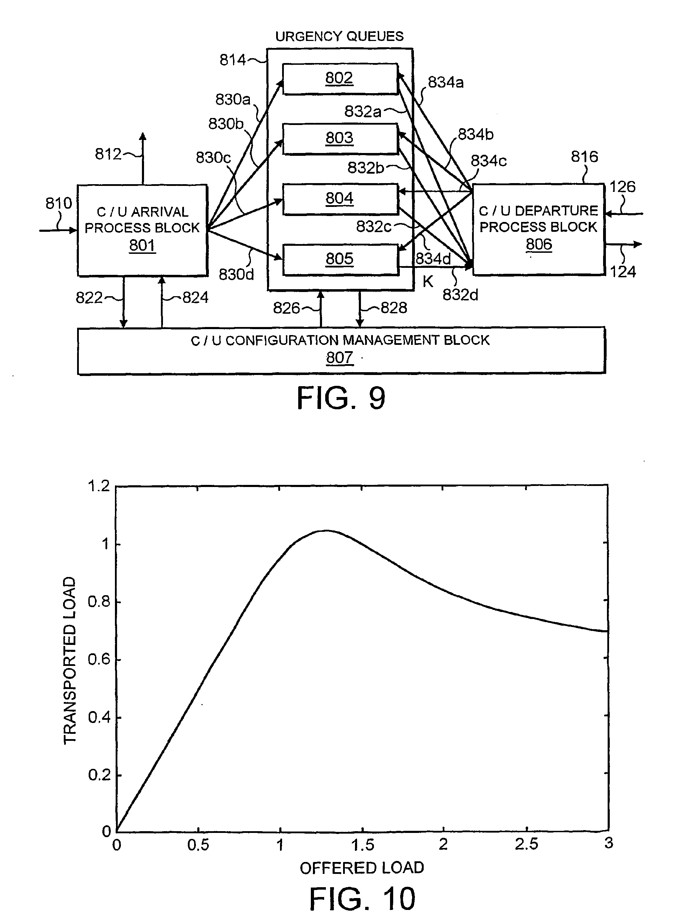

A Policer/Shaper achieves a desired load profile by selective discard of packets. Packets are preferably discarded based on an instantaneous approximation of the offered load. Referring to Figure 10, there is illustrated a load profile for an exemplary implementation of a Policer/Shaper. Figure 10 illustrates a load profile for an exemplary policer/shaper implementated as a queue with 10 buffers and stochastic service times sampled from an exponential distribution, with rate parameters :₁=:₂=... =:₉=1.3234, :₁₀=0.5. The graph exhibits a load profile for a Policer/Shaper implemented as a queue with 10 buffers having service times sampled from an exponential distribution whose rate parameter is dependent on the number of packets queuing. A description of such an implementation is provided in an example hereinafter. The service rate parameters are :₁=_{:}2-=...=:₉=1.3234, :₁₀=0.5, the numeric values for the service rates and offered and transported load being scaled so that the upper threshold level takes the value 1. The load profile illustrated in Figure 10 depicts the average transported load when the arriving traffic has a Poisson pattern. The application of standard queuing theory results permit the determination of the expected loss rate.

A third function of the poiicer/shapers 104 is to allocate cherish and urgency classifications to the packet identifiers included in their queues. By allocating such classifications to the packet identifiers, the packets themselves are inherently allocated the same classification. The principle of cherish and urgency levels is discussed in international patent publication no-WO00/65783. A cherish level indicates a class or level of loss for a packet. The class of loss indicates the tendency of the packet to be discarded. An urgency level indicates the level of urgency by which a packet should be processed. The urgency and cherish levels can, in combination be considered to constitute a priority level for a packet. Thus a priority level has two components in this context.

As discussed hereinabove, in this exemplary policer/shaper, transport characteristics for a stream, including allocation of cherish and urgency levels, are determined based on the offered load. The cherish and urgency classifications are advantageously assigned simultaneously to packet identifiers based on a function of the current state of the queue when the classification is being calculated. The likelihood of being in a particular state is a function of the offered load. This classification function is configurable, and can be chosen without constraint. For example, a given policer/shaper may be configured to assign one of two classifications to packets based on a probabilistic choice. The classification probability used may be related to the length of the queue. That is, such a configuration may be designed to allocate higher classifications to packets with a higher probability when the offered load is low.

The classification of a packet determines the maximum loss and delay it will most likely experience when it is multiplexed with other streams at the output of the policer/shapers, as will be described further hereinbelow. This is a separate concept to that of the loss and delay the packet may experience inside the policer/shaper itself. The loss experienced by a packet in the policer/shaper depends on the recent arrival rate of the stream and the length of the queue. The delay is determined by the configured service rates and the length of the queue.

Each of the policer/shapers 104 is preferably embodied using a queue with a variable service rate. When a policer/shaper 104 receives a packet identifier, it determines whether the packet identifier should be stored in its internal queue or discarded. The control of the admission of a packet identifier into a policer/shaper queue is discussed further hereinbelow.

In the following, the operation by which packets are admitted to or discarded from policer/shapers 104 is first discussed. For the purposes of this discussion, an example is taken of a policer/shaper utilising a queuing system having a queue length of four as illustrated in Figure 2. Each state in Figure 2 is labelled with the length of the queue in that state. The service times in each state are obtained by sampling an exponential distribution with rate parameter µ. The service times determine the conceptual rate of service for the packet. Two different service rates are used in the example shown in Figure 2. If the queue is in state 1 (ie the queue has only one packet) then µ₁ determines the rate of service for the packet at the head of the queue. If the queue is longer, for example in state 3, service rate µ₂ would be used. This example embodiment of the policer/shaper also has arbitrary discard probabilities associated with each state. That is, on arrival, there is a probability that the packet identifier will be arbitrarily discarded. In this example, the probability of this event depends on the state of the queue when the packet identifier arrives. The operation of a policer/shaper is now described in terms of the state of the queue on arrival of the packet identifier.

In a first case, it is assumed that the queue is full at the time the packet identifier arrives. In such a case, the probability of the packet identifier being entered into the queue is zero. This does not necessarily mean that the packet is automatically discarded, as the packet may have been sent to more than one of the available policer/shapers. In such a case, the policer/shaper 104 forwards a command on its respective line 138 to decrement the reference count for the packet associated with a particular identifier. The queue memory manager then will discard the packet referenced by the packet identifier if its reference count is 0 or less.

In a second case, at the time of arrival of a packet identifier at the policer/shaper 104 the queue is nearly full. For example, suppose the queue is in state 3. In state 3, there is a 30% chance that the packet identifier will not be entered into the queue. If the packet identifier is admitted, then it is stored in the queue of the policer/shaper and the queue moves to state 4. The queue is then full, and any packet identifiers arriving before a packet identifier in the queue departs will not be admitted.

If the packet identifier is entered into the queue of the policer/shaper 104, the policer/shaper 104 sends an appropriate signal on its respective line 138 to the queue memory manager indicating that the packet associated with the packet identifier is to be admitted into the queue memory 112 and stored in a specific queue allocated for packets belonging to this stream.

When a departure is scheduled, the packet identifier at the head-of the queue is serviced. The sampled rate used to service this packet identifier depends on the state of the queue. On the basis that the queue is in state 4 the sample service rate used to service this packet identifier is determined by an exponentially distributed random variable with mean µ₂. The calculated service time of this packet is based on the sample service rate and the length of the packet.

In a third case a packet identifier arrives at a time when the queue is nearly empty. The processing of the packet identifier in this case is very similar to the case when the queue is nearly full. Suppose a packet identifier arrives when the queue is in state 1. There is no chance of the packet being arbitrarily discarded, since the probability of this event is configured to be zero. Therefore the packet identifier is stored in the queue, and the queue moves to state 2. If a departure event is scheduled before another arrival occurs, the packet identifier at the head of the queue is serviced based on the service rate for state 2 which is µ₁.

In a fourth case the packet identifier arrives at a time when the queue is empty. In this case, as in the third case, the packet identifier will be admitted to the queue.

The description contained hereinabove has assumed that the policer/shaper is not configured to send any packets without delay. In other words, the policer/shaper preferably has no low load transparency, all packets being delayed.

In its simplest form, low load transparency allows the first packet arriving at an empty queue to be forwarded immediately. Notwithstanding this action, the queue moves into state 1. Subsequent packets arriving are processed as though this packet is present, except that when this packet would normally have been forwarded on expiry of its timer, it is not sent. Whether or not a packet identifier has been forwarded immediately on arrival or not is recorded in the queue. This concept can similarly be extended to multiple packets.

Before a packet identifier leaves a poficer/shaper, the policer/shaper determines a quality classification for that packet identifier. The policer/shapers classify the packet identifiers, as described hereinabove, with cherish and urgency classifications. Each packet identifier must be classified with a cherish and urgency classification before it is forwarded to the cherish/urgency multiplexer 106. The classification assigned to a packet identifier is a function of the current state of the queue.

Again assume a policer/shaper having a queue of length 4. As shown in Figure 2, it is assumed that the queue of the policer/shaper is configured such that the service rates for states 1 and 2 are defined as µ₁, and the arbitrary loss possibility for states 1 and 2 is zero. States 3 and 4 have a defined service rate of µ₂, and have an arbitrary loss probability of 0.3 (ie 30%).

In a preferred embodiment, each policer/shaper is configured with a primary and a secondary cherish/urgency classification and a packet identifier is assigned one of the classifications upon arrival. Each state has an associated probability of a packet being classified with the primary classification. The probability of classifying a packet with the primary classification in each state is, in this example, configured to be: for state 1, 100%; for state 2, 80%; for state 3, 60%; and for state 4, 40%. These probabilities are illustrated in Figure 3.

For example, the primary classification may be a more desirable classification than the secondary classification. If the offered load on the stream is low, the packets have a higher probability of being assigned the more desirable primary classification, as the queue will most often be in state 1 or 2. As the offered load increases, there is a higher probability that a packet identifier will be assigned the secondary classification, which is less desirable, as this could mean the packet identifier will experience more delay and/or loss in the cherish/urgency multiplexor.

Referring to the discussion hereinabove of the criteria for admitting a packet identifier to the queue, when a packet identifier is admitted to the queue in case 2 (ie in the example when the queue is in state 3 and the packet identifier is admitted, moving the queue to state 4) the probability of classifying the packet identifier with the primary classification is 40% as the queue is then in state 4. Therefore there is a 40% chance that the packet identifier will be assigned the primary classification, and a 60% chance that it will be assigned the secondary classification. This classification of the packet identifier is based on a simple probabilistic choice.

A packet identifier is then emitted from the policer/shaper queue at the end of the calculated service time, and the queue moves to state 3. A new calculated service time based on the defined parameters of state 3 then determines when the next departure is performed. If an arrival occurs before this period of time expires, the queue may then move to state 4 again, based on whether the arrival is arbitrarily discarded or not.

Referring to case 3 above, in the case where a packet identifier arrives when the queue is nearly empty, the packet identifier is classified using the probability associated with state 2. In this case, there is an 80% chance of the packet identifier being sent to the cherish/urgency multiplexer 106 with the primary classification.

Arbitrarily discarding packets on their arrival at a policer/shaper not only reduces the arrival rate of the stream, but also helps to avoid burst loss. For example, if a burst of six packets arrived in the queuing system of Figure 2, the last two packets would be lost if packets were not arbitrarily discarded. On the other hand, if the probability of arbitrary discard increases with the queue length, it may be the case that, for example, the fourth or third packet is discarded on arrival, thus distributing the loss in the burst more fairly.

Another function of the policer/shaper as described hereinabove, is to keep the packet associated with the packet identifier being processed in the queue memory 112 by interacting with the queue memory manager 114. Storing packets in queues is necessary to ensure that packets in a stream are not re-ordered by the service process of the cherish/urgency multiplexer 106. Depending on the function chosen to assign cherish/urgency levels to packets, there is the possibility the packets could be re-ordered during the multiplexing onto line 124, as discussed further hereinafter.

As an example, consider the simple probabilistic classification function described above. Assume a burst of four packet identifiers arrive in the policer/shaper and all packets are stored in the queue. Furthermore, assume no more arrivals occur during the first period in question. Furthermore again, assume that the cherish/urgency multiplexor is not empty, with packets originating from other policer/shapers. Finally, assume that the primary cherish/urgency classification has a desirable high urgency level, while the secondary classification has a low urgency level. Given these conditions, the packet identifier at the start of the burst, referred to as "packet identifier 1" has a higher probability of being assigned the secondary cherish/urgency classification then a packet near to the end of the burst, called "packet identifier 4". If packet identifier 1 is assigned the secondary classification, while packet identifier 4 is assigned the primary classification, the difference in urgency levels may cause packet identifier 4 to be serviced before packet identifier 1 in the cherish/urgency multiplexer 106.

In order to avoid this, policer/shapers instruct the queue memory manager 114 to queue packets in the queue memory 112 according to the order in which the corresponding packet identifiers are received in the policer/shaper. That is, on arrival in the policer/shaper, if a packet identifier is not discarded the queue memory is instructed to queue the packet in the queue of the relevant stream in the order in which it arrived.

Figure 8 shows an example implementation of a policer/shaper 104. The exemplary Policer/Shaper includes Policer/Shaper arrival process block 701, a packet identifier queue block 702, a Policer/Shaper departure process block 704, a timer 703, a discard probability generator 706, and a service time generator 707.

Packet identifiers arrive via line 708 to the Policer/Shaper arrival process block 701. The Policer/Shaper arrival process block 701 notifies the Policer/Shaper configuration management block 705 via line 720 that a packet identifier has arrived. The Policer/Shaper configuration management block polls the packet identifier queue block 702 via line 724 to obtain the current length of the queue within the Policer/Shaper. Based on the response from the packet identifier queue block via line 726, the Policer/Shaper configuration management block determines if the queue is full or not. If there is available capacity in the queue, the Policer/Shaper configuration management block 705 then determines whether or not the packet identifier should be arbitrarily discarded, using input from the discard probability generator 706 on line 732.

If the packet identifier is to be admitted to the queue, the Policer/Shaper configuration management block 705 alerts the Policer/Shaper arrival process block 701 via line 722 to admit the packet identifier. On receipt of this response, the Policer/Shaper arrival process block 701 sends a request via line 736 (equivalent to one of lines 138) to the queue memory manager 114 to enqueue the packet in the one queue in the queue memory which is allocated for this stream. The Policer/Shaper arrival process then forwards the packet identifier to the packet identifier queue block 702 via line 710. The Policer/Shaper configuration management block 705 calculates a new service time, based on input from the service time generator 707 on line 734 and the length of the packet, and sends this service time to the Policer/Shaper departure process block 704 via line 728. The Policer/Shaper departure process forwards the new service time to the timer 703 via line 716. The timer 703 resets itself to wake up at the end of the new service time.

If the Policer/Shaper configuration management block 705 determines that the queue is full, it instructs the Policer/Shaper arrival process block 701 via line 722 to discard the packet identifier. In this case, the Policer/Shaper arrival process block 701 sends a discard instruction to the queue memory manager114 via line 736. The Policer/Shaper arrival process blockthen discards the packet identifier.

When the timer 703 wakes up, it sends a request via line 718 to the Policer/Shaper departure process block 704 to emit a packet identifier. The Policer/Shaper departure process block sends a request to the Policer/Shaper configuration management block 705 via line 730 for a classification and a new service time. The configuration management block 705 polls the packet identifier queue block 702 via lines 724 and 726 to obtain the queue's current length. The configuration management block uses the current length of the queue to determine the classification for the packet identifier which is about to be emitted. The classification is sent to the Policer/Shaper departure process block via line 728. The Policer/Shaper departure process 704 concatenates a queue identifier, specifying which queue in the queue memory 112 is used for storing packets of this stream, and the classification to the packet identifier and forwards this tuple of data on line 738.
It should be noted that in this example implementation the classification of the packet identifiers is carried out as the packets leave the queue. The point at which the packets are classified within the Policer/Shapers is, however, implementation dependent, and is not limited to the example given herein. As described earlier hereinabove, the packet identifiers may be classified on arrival rather than on departure.

If the queue identified in the packet identifier queue block 702 is non-empty, the Policer/Shaper configuration management block 705 also sends a new service time to the Policer/Shaper departure process block 704 via line 728. This service time is forwarded to the timer 703 via line 716, and the timer sets itself to wake up after this time. If the queue is empty, no action is taken.

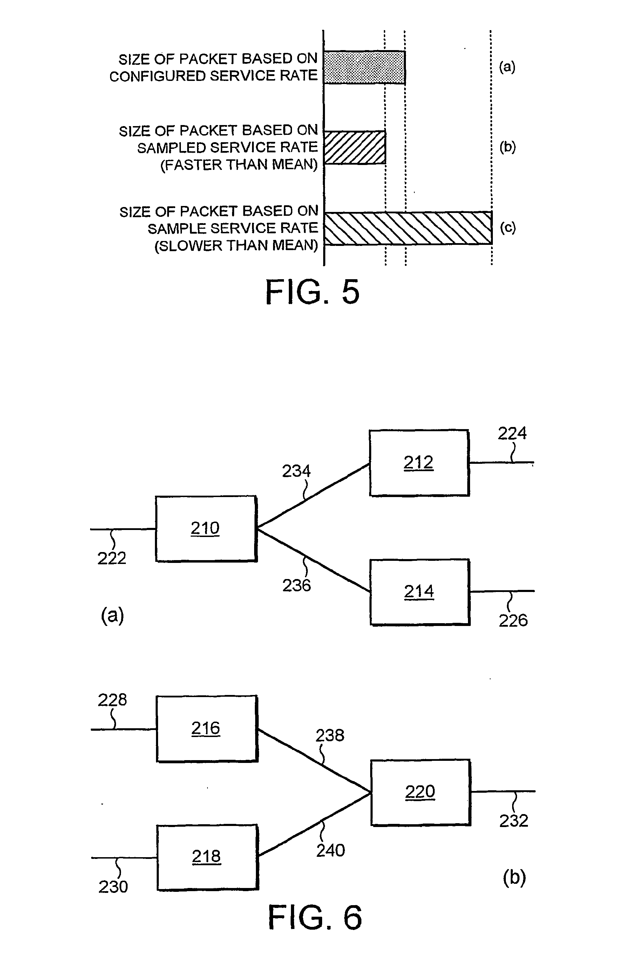

Further possible modifications to the policer/shapers 104 shown in Figure 1 are illustrated with reference to Figure 6. As shown in Figure 6, the policer/shapers may be cascaded in various way.

Referring to Figure 6(a), there is illustrated an advantageous arrangement in which the output of a policer/shaper 210 provides an input to two parallel policer/shapers 212 and 214. The policer/shaper 210 receives packet identifiers on line 222 from the stream identifier 102. In accordance with the standard operation of the policer/shaper, the policer/shaper 210 selectively discards packet identifiers and time-shifts packet identifiers to provide a modified flow of packet identifiers on its output. In a first embodiment the thus modified flow of packet identifiers is broadcast on lines 234 and 236 to each of the parallel policer/shapers 212 and 214. The respective policer/shapers 212 and 214 then selectively discard packet identifiers and time-shift packet identifiers to generate two further modified packet identifier flows on their outputs 224 and 226. In a second embodiment, the output of the policer/shaper 210 is selectively provided to either one or the other of the policer/shapers 212 and 214. The appropriate one of the policer/shapers 212 and 214 then selectively discards packet identifiers and time-shifts packet identifiers onto its respective output.

Referring to Figure 6(b), there is illustrated a further arrangement in which two parallel policer/shapers 216 and 218 receive inputs comprising packet identifiers on flows on lines 228 and 230. The output of both policer/shapers 216 and 218 on their respective outputs 238 and 240 form an input to a further policer/shaper 220. The policer/shaper 220 outputs packet identifiers on line 232.

It will be apparent to the person skilled in the art how policer/shapers can be cascaded in various combinations of the arrangements shown in Figure 6. For example, the arrangements of Figures 6(a) and 6(b) may be cascaded. In addition, any one of the policer/shapers may also receive inputs from other sources. For example, the policer/shaper 212 of Figure 6(a) may receive an additional input which is not derived from another policer/shaper. One skilled in the art will appreciate how various cascading arrangements may be implemented. The only constraint is that the cascaded policer/shapers must be connected in an acyclic graph.

On departure, the policer/shaper sends both the packet identifier, and its associated queue identifier and classification to the cherish/urgency multiplexor 106 via a respective output line 122. The cherish/urgency multiplexor requires the packet identifier in addition to the queue identifier in case it has to issue a discard instruction to the queue memory manager 114, as will be discussed in further detail hereinbelow.

The cherish/urgency multiplexor 106 manages the contention for the network resources between two or more streams. The cherish/urgency multiplexor 106 receives packet identifiers from the various policer/shapers 104, each packet identifier being tagged with a cherish/urgency classification.

The classification of a packet identifier defines a cherish level and an urgency level for the packet with which it is associated. The cherish/urgency multiplexor manages the contention between two or more streams by servicing packets (via their packet identifiers) depending on their urgency level and, when necessary, discarding packets depending on their cherish level. The cherish level determines which packets are entered into the cherish/urgency multiplexor. The urgency level determines the order in which the packets are taken from the cherish/urgency multiplexor. Classifying packets using cherish and urgency levels is described in International Patent Publication No.WO00/65783 Thus the cherish/urgency mulitplexor 106 manages the contention between the three streams 122a, 122b and 122c at the outputs of the policer/shapers 104a, 104b and 104c

When a packet identifier with its associated cherish/urgency classification arrives, the cherish/urgency multiplexor 106 determines whether the packet identifier should be stored or discarded. This is determined by the available storage capacity in the cherish/urgency multiplexor and the cherish level associated with the identifier.

In one known method of implementing cherishing, access to a buffer in the cherish/urgency multiplexer is determined by associating a cherish level with a particular area of the buffer. That is, suppose a packet can be classified with any one of *N* cherish levels. Then, assume there are *K_{N}* buffers in total. Traffic of cherish level 1 can enter any of the *K_{N}* buffers, while traffic of cherish level *i* can only enter the first *K*_{*N-I*+1} buffers, where *K₀* = 0 < *K₁* <... <*K_{N}*. Therefore, packets of cherish level 1 will have greater probability of finding available buffer resources than packets of cherish level *i,* where *i* > 1.

A scheme is also necessary to determine which packet identifier to forward, that is, how the urgency levels should be used to determine the order in which packets are serviced. One approach is to forward the identifier at the head of the queue with the highest urgency level, although other approaches are possible.

The loss rate for packet identifiers in a given stream is determined both by the cherish level assigned to the packets and by the maximum arrival rate for all other streams which have a cherish level of equal or greater value. The order in which packets are serviced in the cherish/urgency multiplexor depends on their urgency levels and the arrival rates and patterns of more urgent traffic. This determines the delay experienced by the packet identifier in the cherish/urgency multiplexor.

If the cherish/urgency multiplexer 106 discards a packet identifier it instructs the queue memory manager via line 136 to decrement the reference count for the appropriate packet from the queue memory 112.

The cherish/urgency multiplexor records statistics about the traffic flows, including but not limited to, the number of the bytes and/or the number of packets both accepted and rejected for each urgency level and each cherish level.

The cherish/urgency multiplexor forwards one of the stored packet identifiers along with its associated queue identifier from its internal buffers to the rate limiter 108 on line 124 responsive to a request from the rate limiter on line 126. The choice of which identifier pair is forwarded to the rate limiter responsive to a request therefrom is determined by the packet identifier's urgency level and the selection mechanism of the cherish/urgency multiplexor.

An example implementation of a cherish/urgency multiplexor 106 is illustrated in Figure 9. The cherish/urgency multiplexor includes a cherish/urgency arrival process block 801, a set of urgency queues 814 comprising queues 802 to 805, a cherish/urgency departure process block 816, and a cherish/urgency configuration management block 807.

Packet identifiers arrive via line 810 to the Cherish/Urgency arrival process block 801. The Cherish/Urgency arrival process block notifies the Cherish/Urgency configuration management block 807 that a packet identifier has arrived and forwards its cherish level via line 822. The Cherish/Urgency configuration management block 807 requests the length of each one of the urgency queues 802-805 via line 826. Based on the current total number of packet identifiers queueing in the cherish/urgency multiplexor 106 and the cherish level of the packet identifier, the Cherish/Urgency configuration management block determines whether or not to discard the packet.

If the packet identifier is to be discarded, the Cherish/Urgency configuration management block 807 notifies the Cherish/Urgency arrival process 801 accordingly via line 824. In this case, the Cherish/Urgency arrival process sends an instruction to discard the packet to the queue memory via line 812, identifying the packet to discard by its packet identifier and its queue identifier. These identifiers are then discarded by the Chersih/Urgency arrival process block 801.

Otherwise, the Cherish/Urgency configuration management block 807 notifies the Chersih/Urgency arrival process 801 via line 722 to forward the packet identifier to one of the urgency queues 802-805. There is one urgency queue for each urgency level. This example implementation illustrates a cherish/urgency multiplexor configured for four possible urgency levels. The Cherish/Uurgency arrival process obtains the urgency level for the packet identifier and forwards the packet identifier and its associated queue identifier via one of the lines 830 to the appropriate urgency queue.

Requests for packets from the rate limiter are received by the Chersih/Urgency departure process block 806 via line 818. When a packet request arrives, the Chersih/Urgency departure process requests the head element of one of the urgency queues 802-805 via one of the lines 834. In the preferred embodiment, the identifiers at the head of the most urgent queue will be requested. The packet identifier and queue identifier pair at the head of the queue which has received the request are forwarded to the Chersih/Urgency departure process block 806 via one of the lines 832. The Chersih/Urgency departure process block 806 forwards the pair of identifiers immediately to the rate limiter via line 124.

The rate limiter 108 moves contention from a point downstream in the network to within the multiplexor 100 by restricting the service rate to one for which the network has sufficient resources. The rate limiter ensures that the maximum service rate is not exceeded in the long term by assuring that appropriate gaps are maintained between transmitted packets.

The rate limiter 108 requests packet identifiers from the cherish/urgency multiplexor on a request line 126, and receives packet identifiers along with their associated queue identifiers on line 124. On receiving the pair of identifiers on line 124, the rate limiter provides the queue identifier on line 134 to the queue memory manager 114. Responsive thereto, the queue memory manager 114 provides the packet at the head of the identified queue from the queue memory to the rate limiter on line 132. The rate limiter then forwards packets for transmission to the output interface on line 128. On forwarding a packet to the output interface, the rate limiter sets a timer to represent the service time of the particular packet at the configured rate. At the end of the timing period assigned to the servicing of the particular packet, the rate limiter requests a further packet on line 126 from the cherish/urgency multiplexor 106.

If no re-ordering has occurred in the cherish/urgency multiplexor, the packet sent from the queue memory manager will be the same packet identified by the packet identifier. Otherwise, the packet identifier received by the rate limiter will refer to a packet which is still waiting in the queue in the queue memory.

The rate limiter can service packets stochastically or deterministically. The rate limiter may thus service packets such that they have variable spacing, as discussed hereinabove with reference to the policer/shapers.

A unit can be made from combining a cherish/urgency multiplexor 106 and rate limiter 108, preferably one which services packets stochastically. Such units can be cascaded with a plurality of policer/shapers and other such cherish/urgency multiplexor and rate limiter units and may receive additional inputs from other sources. One skilled in the art will appreciate how various cascading arrangements may be implemented. The only constraint is that the cascaded combination of these units must be connected in an acyclic graph.

If stochastic service rates are used, there is the potential that the sampled service rate may be much faster than the rate at which the packet can be physically transmitted by the output interface. In this case, the calculated resource size of the packet will be smaller than the actual size of the packet as illustrated in Figure 5. Referring to Figure 5a, there is illustrated the actual size of the packet, according to the physical transmission rate of the transmission medium to which it will be forwarded. Figure 5b illustrates the size of the packet where the service rate chosen for the packet is greater than the rate at which the packet will actually be transmitted on the physical medium. Figure 5c illustrates the size of the packet in the case where the service rate chosen for the packet is smaller than the rate at which the packet will actually be transmitted by the output interface 110.

As can be seen from Figure 5, if the calculated resource size is actually smaller than the actual resource size of the packet, two packets may overlap. In a practical system two packets cannot overlap during transmission. Instead, a burst of two or more packets will be observed. Therefore, when the packet identifiers are serviced stochastically, there is a finite probability that two or more packets will be sent back-to-back.

The output interface 110 provides flow control feedback on line 130 to the rate limiter 108. If the output interface indicates to the rate limiter that transmission has been suspended, the internal timing mechanism of the rate limiter is affected. In this case, the rate limiter can perform one of several actions. For example, the rate limiter may be configured to discard any packet which is scheduled for servicing during the suspension period. Such discarding of packets by the rate limiter requires the rate limiter to generate an alarm signal.

The rate limiter 108 can also be optimised to maximise the resource of the external system at a low load. That is, under low loads, the service rate can be chosen which is faster then the configured rate. As the load on the system increases, the service rate will be decreased until this is near to or at the configured rate.

The output interface 110 provides the basic functionality necessary for the onward transmission of data packets. The output interface 110 provides flow control feedback on lines 130 to the rate limiter 108 when some external back pressure (for example from the transmission medium) occurs. Thus the output interface transmits packets on line 142, and receives flow control signals on line 144 from the operating system or device driver.

The output interface is not responsible for any direct processing relating to the quality management of the data stream. If a packet is received by the output interface and the external system or device indicates that it has available resources for transmission, then the packet is transmitted by the output interface without delay. If the rate limiter is operating in deterministic mode and flow control has not been exerted, there is never more than one packet in the buffer of the output interface at any one time.

Thus there has been described an invention which may be advantageously utilised in a multiplexor for guaranteeing a predetermined quality of service. Although the invention is described herein with reference to a particular exemplary embodiment, the person skilled in the art will appreciate that the invention is not so limited in its applicability, and may be more generally applied. The invention is limited only as defined in the following claims.

## Claims

1. A method of controlling an information flow in a data transmission system, comprising: receiving a plurality of data packets (118) from a plurality of data streams; allocating a packet identifier and a priority level to each packet; servicing packet identifiers in dependence on the allocated priority levels; and **characterised in that** it further comprises instructing a queue memory (112) to queue the packets in respective queues of the relevant data streams, in the order in which they arrived; and outputting a packet from the head of a queue, which queue includes a packet identified by a serviced packet identifier.

2. The method of claim 1 wherein, for at least one data stream, each packet within the data stream is allocated one of a plurality of priority levels.

3. The method of claim 1 or claim 2 in which the priority level indicates a class of loss and class of urgency of service for the packet.

4. The method of any one of claims 1 to 3 wherein the step of servicing each packet identifier includes selectively discarding packet identifiers, wherein if a packet identifier is discarded the corresponding queued packet is removed.

5. The method of any one of claims 1 to 4 further comprising outputting each packet (128) at a configured rate.

6. The method of claim 5 in which the configured rate is less than a maximum rate at which the data packets may be output.

7. The method of any one of claims 1 to 6 further comprising the step of selectively discarding the plurality of received data packets and/or selectively time-shifting the plurality of received data packets.

8. The method of any one of claims 1 to 7 further comprising the step of selectively discarding the output data packets and/or selectively time-shifting the plurality of output data packets.

9. The method of any one of claims 1 to 8 wherein a packet identifier for a received packet is selectively admitted to a queue, the probability of a packet identifier being entered into a queue being dependent upon the length of the queue (Fig. 2).

10. The method of claim 9 in which the probability of a packet identifier being admitted to the queue is dependent upon the length of the queue (Fig. 2).

11. The method of claim 9 in which the probability of a packet identifier already present in the queue being discarded to permit the admittance of the packet identifier for a received packet is dependent on the length of the queue (Fig. 2).

12. The method of any one of claims 9 to 11 in which a level of service is controlled by controlling packet identifier admissions to the queue.

13. The method of claim 9 or claim 12 wherein the priority level is allocated to a packet identifier based on a function of the state of the queue.

14. The method of any one of claims 9 to 13 wherein each packet identifier is selectively admitted to at least one of a plurality of queues.

15. The method of claim 14 further comprising multiplexing the outputs of the plurality of queues.

16. The method of claim 15 wherein the step of servicing comprises servicing the output of the queue.

17. The method of any one of claims 1 to 16 in which the data packets are output deterministically.

18. The method of any one of claims 1 to 16 in which the data packets are output with variable spacing.

19. The method of any one of claims 1 to 18 further comprising multiplexing the output packets with further output packets.

20. The method of any one of claims 1 to 19 further comprising the step of identifying a data stream with which a received packet is associated.

21. A controller (Fig. 1) for controlling an information flow in a data transmission system, comprising: input means (100) for receiving a plurality of data packets from a plurality of data streams; control means (102) for allocating a packet identifier and a priority level to each packet; wherein the packet identifier represents the sequence in which the packet was received in the information flow; servicing means (106) for servicing packet identifiers in dependence on the allocated priority levels; and **characterised in that** it further comprises instructing means for instructing a queue memory (112) to queue the packets in respective queues of the relevant data streams in the order in which they arrived; and output means (110) for outputting a packet at the head of a queue, which queue includes a packet identified by a serviced packet identifier.

22. The method of claim 21 wherein, for at least one data stream, each packet within the data stream is allocated one of a plurality of priority levels.

23. The controller (Fig. 1) of claim 21 or claim 22, further comprising a rate limiter (108) for outputting the data packet at a configured rate.

24. The controller (Fig. 1) of any of claims 21 to 23 further comprising means (104) for selectively discarding the plurality of received data packets and/or selectively time-shifting the plurality of received data packets.

25. The controller (Fig. 1) of any one of claims 21 to 24 further comprising means for selectively discarding the output data packets and/or selectively time-shifting the output data packets.

26. The controller (Fig. 1) of claim 24 or claim 25 wherein said means (104) comprises a policer/shaper.

27. The controller (Fig. 1) of claim 24 or claim 25 wherein said means (104) comprises a plurality of policer/shapers.

## Patentansprüche

1. Verfahren zum Steuern eines Informationsflusses in einem Datenübertragungssystem, das folgende Schritte aufweist: Empfangen einer Vielzahl von Datenpaketen (118) von einer Vielzahl von Datenströmen; Zuweisen eines Paketidentifikators und eines Prioritätsgrades zu jedem Paket; Bearbeiten von Paketidentifikatoren in Abhängigkeit von den zugewiesenen Prioritätsgraden; und **dadurch gekennzeichnet ist, dass** es außerdem folgende Schritte aufweist: Anweisen eines Warteschlangenspeichers (112), die Pakete in der Reihenfolge in der sie eingetroffen sind in entsprechende Warteschlangen der entsprechenden Datenströme einzureihen; und Ausgeben eines Pakets von der Spitze einer Warteschlange, wobei die Warteschlange ein durch einen bearbeiteten Paketidentifikator identifiziertes Paket aufweist.

2. Verfahren nach Anspruch 1, wobei für zumindest einen Datenstrom jedem Paket innerhalb des Datenstroms ein Prioritätsgrad aus einer Vielzahl von Prioritätsgraden zugewiesen wird.

3. Verfahren nach Anspruch 1 oder Anspruch 2, bei dem der Prioritätsgrad eine Verlustklasse und eine Dringlichkeitsklasse der Bearbeitung für das Paket bezeichnet.

4. Verfahren nach einem der Ansprüche 1 bis 3, wobei der Schritt des Bearbeitens jedes Paketidentifikators ein selektives Verwerfen von Paketidentifikatoren umfasst, wobei das entsprechende in der Warteschlange eingereihte Paket entfernt wird, wenn ein Paketidentifikator verworfen wird.

5. Verfahren nach einem der Ansprüche 1 bis 4, das außerdem ein Ausgeben jedes Pakets (128) mit einer konfigurierten Rate aufweist.

6. Verfahren nach Anspruch 5, bei dem die konfigurierte Rate geringer ist als eine maximale Rate mit der die Datenpakete ausgegeben werden können.

7. Verfahren nach einem der Ansprüche 1 bis 6, das außerdem den Schritt des selektiven Verwerfens der Vielzahl von empfangenen Datenpaketen und/oder des selektiven zeitlichen Verschiebens der Vielzahl von empfangenen Datenpaketen aufweist.

8. Verfahren nach einem der Ansprüche 1 bis 7, das außerdem den Schritt des selektiven Verwerfens der ausgegebenen Datenpakete und/oder des selektiven zeitlichen Verschiebens der Vielzahl von ausgegebenen Datenpaketen aufweist.

9. Verfahren nach einem der Ansprüche 1 bis 8, wobei ein Paketidentifikator für ein empfangenes Paket selektiv in eine Warteschlange aufgenommen wird, wobei die Wahrscheinlichkeit, dass ein Paketidentifikator in eine Warteschlange eingetragen wird, von der Länge der Warteschlange (Fig. 2) abhängig ist.

10. Verfahren nach Anspruch 9, bei dem die Wahrscheinlichkeit, dass ein Paketidentifikator in die Warteschlange aufgenommen wird, von der Länge der Warteschlange (Fig. 2) abhängig ist.

11. Verfahren nach Anspruch 9, bei dem die Wahrscheinlichkeit, dass ein in der Warteschlange bereits vorhandener Paketidentifikator verworfen wird, um das Aufnehmen des Paketidentifikators für ein empfangenes Paket zu ermöglichen, von der Länge der Warteschlange (Fig. 2) abhängig ist.

12. Verfahren nach einem der Ansprüche 9 bis 11, bei dem ein Grad der Bearbeitung durch ein Steuern des Aufnehmens der Paketidentifikatoraufnahmen in die Warteschlange gesteuert wird.

13. Verfahren nach Anspruch 9 oder Anspruch 12, wobei der Prioritätsgrad einem Paketidentifikator basierend auf einer Funktion des Zustands der Warteschlange zugewiesen wird.

14. Verfahren nach einem der Ansprüche 9 bis 13, wobei jeder Paketidentifikator selektiv in zumindest eine Warteschlange aus einer Vielzahl von Warteschlangen aufgenommen wird.

15. Verfahren nach Anspruch 14, das außerdem ein Multiplexen der Ausgaben der Vielzahl von Warteschlangen aufweist.

16. Verfahren nach Anspruch 15, wobei der Schritt des Bearbeitens ein Bearbeiten der Ausgabe der Warteschlange aufweist.

17. Verfahren nach einem der Ansprüche 1 bis 16, bei dem die Datenpakete deterministisch ausgegeben werden.

18. Verfahren nach einem der Ansprüche 1 bis 16, bei dem die Datenpakete mit variablem Abstand ausgegeben werden.

19. Verfahren nach einem der Ansprüche 1 bis 18, das außerdem ein Multiplexen der angegebenen Pakete mit weiteren ausgegebenen Paketen aufweist.

20. Verfahren nach einem der Ansprüche 1 bis 19, das außerdem den Schritt des Identifizierens eines Datenstroms aufweist, dem ein empfangenes Paket zugeordnet ist.

21. Steuereinheit (Fig. 1) zum Steuern eines Informationsflusses in einem Datenübertragungssystem, die aufweist: Eingabemittel (100) zum Empfangen einer Vielzahl von Datenpaketen von einer Vielzahl von Datenströmen; Steuermittel (102) zum Zuweisen eines Paketidentifikators und eines Prioritätsgrades zu jedem Paket; wobei der Paketidentifikator die Reihenfolge repräsentiert in der das Paket in dem Informationsfluss empfangen wurde; Bearbeitungsmittel (106) zum Bearbeiten von Paketidentifikatoren in Abhängigkeit von den zugewiesenen Prioritätsgraden; und **dadurch gekennzeichnet ist, dass** es außerdem Anweisungsmittel zum Anweisen eines Warteschlangenspeichers (112) aufweist, um die Pakete in entsprechende Warteschlangen des entsprechenden Datenstroms in der Reihenfolge einzureihen in der sie angekommen sind; und Ausgabemittel (110) zum Ausgeben eines Pakets an der Spitze einer Warteschlange, wobei die Warteschlange ein durch einen bearbeiteten Paketidentifikator identifiziertes Paket aufweist.

22. Verfahren nach Anspruch 21, wobei für zumindest einen Datenstrom jedem Paket innerhalb des Datenstroms ein Prioritätsgrad aus einer Vielzahl von Prioritätsgraden zugewiesen wird.

23. Steuereinheit (Fig. 1) nach Anspruch 21 oder Anspruch 22, die außerdem einen Ratenbegrenzer (108) zum Ausgeben des Datenpakets mit einer konfigurierten Rate aufweist.

24. Steuereinheit (Fig. 1) nach einem der Ansprüche 21 bis 23, die außerdem ein Mittel (104) zum selektiven Verwerfen der Vielzahl von empfangenen Datenpaketen und/oder selektiven zeitlichen Verschieben der Vielzahl von empfangenen Datenpaketen aufweist.

25. Steuereinheit (Fig. 1) nach einem der Ansprüche 21 bis 24, die außerdem Mittel zum selektiven Verwerfen der ausgegebenen Datenpakete und/oder selektiven zeitlichen Verschieben der ausgegebenen Datenpakete aufweist.

26. Steuereinheit (Fig. 1) nach Anspruch 24 oder Anspruch 25, wobei das Mittel (104) einen sog. Überwacher/Bearbeiter aufweist.

27. Steuereinheit (Fig. 1) nach Anspruch 24 oder Anspruch 25, wobei das Mittel (104) eine Vielzahl von sog. Überwacher/Bearbeiter aufweist.

## Revendications

1. Procédé de contrôle d'un flux d'informations dans un système de transmission de données, comprenant les étapes suivantes: recevoir une pluralité de paquets de données (118) en provenance d'une pluralité de flux de données ; attribuer un identificateur de paquet et un niveau de priorité à chaque paquet ; servir les identificateurs de paquet en fonction des niveaux de priorité attribués; et **caractérisé en ce qu'**il comprend en outre des étapes consistant à donner instruction à une mémoire de file d'attente (112) de mettre les paquets dans des files d'attente respectives des flux de données concernés, dans l'ordre dans lequel ils sont arrivés; et à fournir en sortie un paquet à partir de la tête d'une file d'attente, ladite file d'attente comprenant un paquet identifié par un identificateur de paquet servi.

2. Procédé selon la revendication 1, dans lequel, pour au moins un flux de données, chaque paquet se trouvant dans le flux de données reçoit l'attribution de l'un d'une pluralité de niveaux de priorité.

3. Procédé selon la revendication 1 ou 2, dans lequel le niveau de priorité indique une classe de perte et une classe d'urgence de service pour le paquet.

4. Procédé selon l'une quelconque des revendications 1 à 3, dans lequel l'étape consistant à servir chaque identificateur de paquet comprend la suppression sélective d'identificateurs de paquet, dans laquelle si un identificateur de paquet est supprimé, le paquet correspondant en file d'attente est supprimé.

5. Procédé selon l'une quelconque des revendications 1 à 4, comprenant en outre la fourniture de chaque paquet (128) à une cadence configurée.

6. Procédé selon la revendication 5, dans lequel la cadence configurée est inférieure à une cadence maximum à laquelle les paquets de données peuvent être fournis.

7. Procédé selon l'une quelconque des revendications 1 à 6, comprenant en outre une étape consistant à supprimer sélectivement la pluralité de paquets de données reçus et/ou décaler temporellement et sélectivement la pluralité de paquets de données reçus.

8. Procédé selon l'une quelconque des revendications 1 à 7, comprenant en outre une étape consistant à supprimer sélectivement les paquets de données fournis en sortie et/ou décaler temporellement et sélectivement la pluralité de paquets de données fournis en sortie.

9. Procédé selon l'une quelconque des revendications 1 à 8, dans lequel un identificateur de paquet pour un paquet reçu est admis sélectivement dans une file d'attente, la probabilité qu'un identificateur de paquet soit introduit dans une file d'attente dépendant de la longueur de la file d'attente (Fig. 2).

10. Procédé selon la revendication 9, dans lequel la probabilité qu'un identificateur de paquet soit admis dans la file d'attente dépend de la longueur de la file d'attente (Fig. 2).

11. Procédé selon la revendication 9, dans lequel la probabilité qu'un identificateur de paquet déjà présent dans la file d'attente soit supprimé, pour permettre l'admission de l'identificateur de paquet d'un paquet reçu, est fonction de la longueur de la file d'attente (Fig. 2).

12. Procédé selon l'une quelconque des revendications 9 à 11, dans lequel un niveau de service est contrôlé en contrôlant les admissions d'identificateurs de paquet dans la file d'attente.

13. Procédé selon la revendication 9 ou 12, dans lequel le niveau de priorité est attribué à un identificateur de paquet sur la base d'une fonction de l'état de la file d'attente.

14. Procédé selon l'une quelconque des revendications 9 à 13, dans lequel chaque identificateur de paquet est admis sélectivement dans au moins l'une d'une pluralité de files d'attente.

15. Procédé selon la revendication 14, comprenant en outre un multiplexage des sorties de la pluralité de files d'attente.

16. Procédé selon la revendication 15, dans lequel l'étape de service comprend le fait de servir la sortie de la file d'attente.

17. Procédé selon l'une quelconque des revendications 1 à 16, dans lequel les paquets de données sont fournis de façon déterministe.

18. Procédé selon l'une quelconque des revendications 1 à 16, dans lequel les paquets de données sont fournis avec un espacement variable.

19. Procédé selon l'une quelconque des revendications 1 à 18, comprenant en outre un multiplexage des paquets fournis en sortie avec d'autres paquets fournis en sortie.

20. Procédé selon l'une quelconque des revendications 1 à 19, comprenant en outre une étape consistant à identifier un flux de données auquel est associé un paquet reçu.

21. Contrôleur (Fig. 1) pour contrôler un flux d'informations dans un système de transmission de données, comprenant:
des moyens d'entrée (100) pour recevoir une pluralité de paquets de données en provenance d'une pluralité de flux de données ; des moyens de commande (102) pour attribuer un identificateur de paquet et un niveau de priorité à chaque paquet ; l'identificateur de paquet représentant la séquence selon laquelle le paquet a été reçu dans le flux d'informations ; des moyens de service (106) pour servir des identificateurs de paquet en fonction des niveaux de priorité attribués; et **caractérisé en ce qu'**il comprend en outre des moyens de commande pour donner instruction à une mémoire de file d'attente (112) de mettre les paquets dans des files d'attente respectives des flux de données concernés dans l'ordre dans lequel ils sont arrivés; et des moyens de sortie (110) pour fournir un paquet à partir de la tête d'une file d'attente, ladite file d'attente comprenant un paquet identifié par un identificateur de paquet servi.

22. Procédé selon la revendication 21, dans lequel, pour au moins un flux de données, chaque paquet se trouvant dans le flux de données reçoit l'attribution de l'un d'une pluralité de niveaux de priorité.

23. Contrôleur (Fig. 1) selon la revendication 21 ou 22, comprenant en outre un limiteur de cadence (108) pour fournir en sortie le paquet de données à une cadence configurée.

24. Contrôleur (Fig. 1) selon l'une quelconque des revendications 21 à 23, comprenant en outre des moyens (104) pour supprimer sélectivement la pluralité de paquets de données reçus et/ou décaler temporellement et sélectivement la pluralité de paquets de données reçus.

25. Contrôleur (Fig. 1) selon l'une quelconque des revendications 21 à 24, comprenant en outre des moyens pour supprimer sélectivement les paquets de données fournis en sortie et/ou décaler temporellement et sélectivement les paquets de données fournis en sortie.

26. Contrôleur (Fig. 1) selon la revendication 24 ou 25, dans lequel lesdits moyens (104) comprennent un dispositif d'administration et/ou de mise en forme.

27. Contrôleur (Fig. 1) selon la revendication 24 ou 25, dans lequel lesdits moyens (104) comprennent une pluralité de dispositifs d'administration et/ou de mise en forme.
